# EUROPEAN PATENT APPLICATION

(11) **EP 3 770 133 A1**
(43) Date of publication of application: **27.01.2021**
(21) Application number: 19771265.6
(22) Date of filing: 11.03.2019
(51) Int. Cl.: C04B 18/08, B07B 4/08, B07B 11/06, B09B 3/00, B09B 5/00, C04B 7/26

(54) **FLY ASH MODIFICATION METHOD**

(30) Priority: 19.03.2018 JP 2018050837
(71) Applicant: Tokuyama Corporation, Shunan-shi, Yamaguchi 745-8648 (JP)
(72) Inventor: KAKIZONO, Kenichi, Shunan-shi, Yamaguchi 745-8648 (JP); OMURA, Kohei, Shunan-shi, Yamaguchi 745-8648 (JP); SEKI, Takuya, Shunan-shi, Yamaguchi 745-8648 (JP); KAWANO, Takeshi, Shunan-shi, Yamaguchi 745-8648 (JP)
(74) Representative: J A Kemp LLP
(86) International application number: PCT/JP2019/009767
(87) International publication number: WO 2019/181619

(57) **Abstract**

A process for reforming the fly ash, including the heating step that heats a raw fly ash powder containing the unburned carbon at a temperature of 780 to 1000°C to decrease the amount of the unburned carbon contained in the raw fly ash powder; and the cooling/classifying step that introduces the heat-treated fly ash in a state of being maintained at a high temperature as obtained through the heating step into a cooling/classifying apparatus so that the fly ash is separated into a fine grains and a coarse grains; wherein the cooling/classifying apparatus 3 used in the cooling/classifying step has a basic structure in which the gas flow for classification is introduced from the lower side and the gas flow Z for cooling/classification introduced into the apparatus is then discharged from the upper side; the heat-treated fly ash is brought into contact with the gas flow Z for cooling/classification, the fine grains contained in the heat-treated fly ash is lifted up and discharged out of the apparatus while the coarse grains contained in the heat-treated fly ash is allowed to stay in the apparatus 3, and the fine grains and the coarse grains are separated and cooled; and the fine grains discharged from the apparatus 3 is recovered by using a dust-collecting apparatus, and the coarse grains is recovered from the apparatus 3.

## Description

### Technical Field:

This invention relates to a process for reforming the fly ash.

### Background Art:

When the fly ash is used as an admixture with the cement or the concrete, it is, usually, desired that the content of the unburned carbon in the fly ash is better small.

In general, however, the fly ash generated from the coal burning thermal power plants contains the unburned carbon in various amounts, say, about 15% by mass at the greatest. Therefore, only some of the fly ash can be used as the admixture.

To obtain the fly ash containing the unburned carbon in decreased amounts (reformed fly ash), there have been proposed methods by which the fly ash is heated and the unburned carbon is removed upon being burned (e.g., patent documents 1 and 2) .

However, it is very difficult to industrially and efficiently obtain the reformed fly ash that can be used as the admixture mentioned above by heating the fly ash and by removing the unburned carbon by burning it.

That is, to remove the unburned carbon from the fly ash by burning it, however, the fly ash must be heated at a temperature of not lower than 700°C. This is because at temperatures lower than 700°C, very extended periods of time are necessary for removing the unburned carbon. The amount of the unburned carbon can be greatly decreased in short periods of time if the temperature for heating is elevated. As the temperature becomes high, however, the fly ash grains tend to melt-adhere together and turn into lumps. The higher the temperature, therefore, the larger the ratio of forming lumps. Besides, extended periods of time become necessary for cooling the lumps. In order to suppress the formation of lumps as much as possible, therefore, the temperature for heating should be set to be not higher than 780°C. To remove the unburned carbon, therefore, the temperature of heating should best be in a range of 700 to 780°C. It is, however, very difficult to conduct the heating maintaining the temperature in such a limited range.

This is because the reaction (burning reaction) of the unburned carbon with oxygen generates heat and, besides, the amount of the unburned carbon undergoes a change as the fly ash is heated. Namely, as the amount of the unburned carbon changes, it happens that oxygen is not often fed in proper amounts into the heating furnace or the temperature varies in the heating furnace. Moreover, the amount of the unburned carbon does not remain constant in the fly ash that is heated. For instance, when the fly ash containing much unburned carbon is heated, the temperature tends to be elevated unnecessarily.

Since diverse fly ashes containing the unburned carbon in varying amounts are heated, it is very difficult to set the temperature of heating to lie in a very limited range of 700 to 780°C. In particular, the heat balance in the furnace tends to be easily lost at a moment of changing over the raw fly ash powder that is to be heated often causing the temperature to be excessively elevated or lowered. There, further, occurs a problem in that oxygen becomes in short supply and the amount of the unburned carbon does not decrease to a sufficient degree. If the frequency of change-over is too high, then the raw material is often changed over while the optimum conditions are still being searched. As a result, it may often become almost impossible to obtain the product that can be favorably used as an admixture.

### Prior Art Documents:

### Patent Documents:

Patent document 1: Japanese Patent Laid-Open No. 2008-126117
Patent document 2: Japanese Patent Laid-Open No. 11-060299

### Outline of the Invention:

### Problems that the Invention is to Solve:

It is, therefore, an object of the present invention to provide a process for reforming the fly ash that contains the unburned carbon in varying amounts by reliably decreasing the amount of the unburned carbon in short periods of time to such a degree that the fly ash after reformed can all be used as an admixture through a relatively simple process.

### Means for Solving the Problems:

In view of the above-mentioned problems, the present inventors have keenly forwarded the study. As a result, the inventors have discovered the fact that the fly ash even containing lumps can be efficiently cooled if it is subjected to the wind power classification so as to be also cooled by the wind, that the improved fly ash can be thus obtained having properties suited for being used as an admixture, and have completed the present invention.

According to the present invention, there is provided a process for reforming the fly ash, including:
the heating step that heats a raw fly ash powder containing the unburned carbon at a temperature of 780 to 1000°C to decrease the amount of the unburned carbon contained in the raw fly ash powder; and
the cooling/classifying step that introduces the heat-treated fly ash containing the unburned carbon in decreased amounts obtained through the heating step into a cooling/classifying apparatus so that the fly ash is separated into a fine grains and a coarse grains; wherein
the cooling/classifying apparatus used in the cooling/classifying step has a basic structure in which the gas flow for classification is introduced from the lower side and the gas flow for cooling/classification introduced into the apparatus is then discharged from the upper side;
the heat-treated fly ash thrown into the cooling/classifying apparatus is brought into contact with the gas flow for cooling/classification, the fine grains contained in the heat-treated fly ash is lifted up and discharged out of the apparatus while the coarse grains contained in the heat-treated fly ash is allowed to stay in the apparatus, and the fine grains and the coarse grains are separated and cooled; and
the fine grains discharged from the cooling/classifying apparatus is recovered by using a dust-collecting apparatus, and the coarse grains is recovered from the cooling/classifying apparatus.

The following embodiments can be preferably employed by the reforming process of the invention.
(1) The classification is carried out in the cooling/classifying apparatus while sprinkling the water.
(2) The amount of the unburned carbon is decreased down to less than 3% by mass through the heating step.
(3) The heating in the heating step is so executed that 50% by mass is not reached by the content of the massive grains that have a maximum diameter of not less than 150 *µ*m contained in the heat-treated fly ash in which the amount of the unburned carbon has been decreased.
(4) In the cooling/classifying step, a classification point is so set that a 45 *µ*m sieve residue of the fine grains obtained by the classification is not more than 34% by mass.
(5) In the cooling/classifying step, the coarse grains obtained by the classification is milled until the 45 *µ*m sieve residue thereof is not more than 34% by mass.
(6) The fine grains recovered from the dust-collecting apparatus is mixed with the milled grains obtained by milling the coarse grains.

### Effects of the Invention:

According to the reforming process of the present invention, the temperature for heating has been set to lie over a range which is so high and wide as from 780 to 1000°C. Therefore, even the raw fly ash powders containing the unburned carbon in different amounts can be heat-treated, in relatively short periods of time, continuously and maintaining stability, into a reformed fly ash that can be favorably used as an admixture with the cement or the concrete.

In the invention, in particular, the fly ash is heated at a high temperature. Namely, the fly ash is heated in the heating apparatus and contains the carbon in a decreased amount; i.e., the heat-treated fly ash assumes the form of lumps containing massive grains of large grain sizes. Here, the heat-treated fly ash is introduced in a state of being maintained at a high temperature into a cooling/classifying apparatus where it is subjected to the cooling and, at the same time, to the wind power classification by using the gas flow for cooling and classification, and is then separated into a coarse grains containing large massive grains and a fine grains. In the cooling/classifying apparatus, the gas flow (e.g., air) for fooling and classification is introduced from the lower side, is brought into contact with the heat-treated fly ash, whereby the fine grains that can be easily cooled is lifted up and is discharged out of the apparatus while the coarse grains that cannot be easily cooled is allowed to stay in the apparatus. That is, the fine grains that can be easily cooled is quickly discharged out of the apparatus while coming in contact with the gas flow for cooling and classification whereas the coarse grains that cannot be easily cooled is allowed to stay in the apparatus and is maintained in a state of being contacted to the gas flow for cooling and classification at all times. Therefore, the coarse grains can be efficiently cooled in short periods of time. That is, in the form of large lumps without being classified, the fly ash can be cooled only poorly efficiently requiring very extended periods of time.

According to the present invention, further, the heat-treated fly ash containing the unburned carbon in decreased amounts is recovered being classified into the fine grains and the milled product of coarse granules. Here, by mixing them together again, the fly ash that contains the unburned carbon in decreased amounts after having been heat-treated can all be efficiently used as an admixture with the cement or the concrete.

### Brief Description of the Drawings:

[Fig. 1] It is a flow chart of a process for reforming according to the present invention.
[Fig. 2] It is a view schematically illustrating the structure of a cooling/classifying apparatus used for carrying out the process of Fig. 1.

### Modes for Carrying Out the Invention:

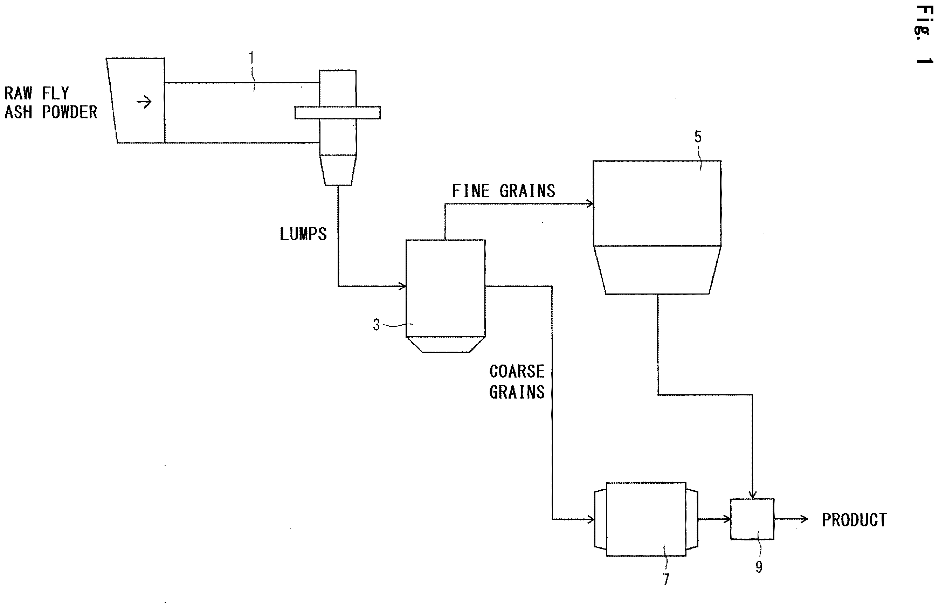

According to the present invention with reference to Fig. 1, a raw fly ash powder containing the unburned carbon is heated in a heating apparatus 1 (heating step) to decrease the amount of the unburned carbon. The heat-treated fly ash containing the unburned carbon in a decreased amount is introduced in a state of being maintained at a high temperature into a cooling/classifying apparatus 3 and is cooled and classified (cooling/classifying step). A fine grains obtained through the cooling and classification is recovered by a dust-collecting apparatus 5 (fine powder-recovering step) while a coarse grains obtained through the cooling and classification is introduced into a milling apparatus 7 (milling step) where it is milled down to a predetermined grain size and is then recovered. The thus recovered fine grains and milled product can be used in their own forms . Usually, however, the two are mixed together in a mixing apparatus 9, and the mixture thereof is shipped as a product for forming an admixture with the cement or the concrete.

### Raw fly ash powder;

The raw fly ash powder that is to be put to the reforming treatment is a fly ash that usually generates in the facilities that burn the coal, such as coal burning thermal power plants. The raw fly ash powder may also be a fly ash that generates after having burned the coal, or after having burned the fuel other than the coal or any fuel burned together with any inflammable wastes.

The grains contained in the raw fly ash powder have a maximum diameter which is, usually, not larger than 150 *µ*m but not smaller than 100 *µ*m.

The raw fly ash powder usually contains the unburned carbon in an amount of about 1 to about 15% by mass. The unburned carbon that is contained in large amounts, however, causes a problem when the fly ash is used as an admixture with the cement or the concrete (hereinafter often called simply as mixed material). For example, the unburned carbon, when contained in large amounts, float on the surfaces of the mortar or the concrete and may form darkened portions. Moreover, chemicals such as chemical blending agents mixed into the fly ash may be adsorbed by the unburned carbon, and may lose their functions.

The present invention is applied to reforming, specifically, the fly ash that contains the unburned carbon in amounts in excess of 3% by mass and, particularly, the fly ash that contains the unburned carbon in amounts in excess of 5% by mass.

### Heating step;

The raw fly ash powder is introduced into the heating apparatus 1 where it is heated to burn the unburned carbon and to thereby decrease the amount of the unburned carbon. The heating is executed so that the amount of the unburned carbon after heated is, for example, not more than 3% by mass, preferably, not more than 1% by mass and, specifically, not more than 0.1% by mass.

Methods of measuring the amount of the unburned carbon contained in the fly ash have been known. For example, the following methods have been known.
(a) A method of detecting the CO₂·CO gases generated by the combustion by using infrared rays;
(b) A method of measuring the ignition loss and estimating the amount of the unburned carbon from the ignited raw material;
(c) A method of calculation based on the amounts of Methylene Blue adsorption;
(d) A method based on the bulk density testing; and
(e) A method of estimating the amount of the unburned carbon by the irradiation with microwaves.

Namely, the raw fly ash powder to be introduced into the heating apparatus 1 and the fly ash (reformed fly ash) heated in the heating apparatus 1 and coming out from the outlet port, are suitably sampled and measured for their amounts of the unburned carbon. The temperature for heating and the time for heating are then set based on the measured values.

In the invention, the temperature for heating in the heating apparatus 1 is set to lie in a range of 780 to 1000°C and, preferably, 800 to 950°C. Since the heating is executed in such a high and wide temperature range, the fly ash can be continuously heated maintaining stability even in case the amount of the unburned carbon frequently varies in the fly ash that is introduced into the heating apparatus 1.

When the temperature for heating is lower than the above-mentioned temperature range, an extended period of time is required before the amount of the unburned carbon decreases down to the predetermined range and the efficiency decreases. When heated to be higher than the above range, on the other hand, the fly ash grains melt-adhere together to form very large lumps that may cause such inconveniences as clogging in the pipes and melt-adhesion on the wall surfaces of the heating apparatus 1. Besides, the fly ash undergoes a change in its chemical properties and often cannot be used as the admixture.

According to the invention, the raw fly ash powder is heated in the high-temperature range as described above, and hence the fly ash grains melt-adhere together inevitably forming large massive grains simultaneously with the formation of the fine powder, the massive grains having maximum diameters of, for example, not smaller than 150 *µ*m. The fly ash before being heated contains the grains having maximum diameters of not larger than 150 *µ*m, and from which it can be confirmed that the massive grains are formed due to the heating. That is, the higher the temperature for heating or the longer the time for heating, the more the fly ash powder turns into lumps, and larger massive grains are formed much. The present invention, therefore, necessitates the cooling and classification as will be described later. Here, however, if the fly ash powder turns into lumps to an excess degree, then a lot of work becomes necessary for the classification and milling, and the efficiency decreases. In the invention, therefore, it is desired that the temperature and the time for heating are so set that the amount of massive grains having maximum diameters of not smaller than 150 *µ*m does not exceed 50% by mass and, specifically, does not exceed 30% by mass under a condition that the amount of the unburned carbon is decreased down to lie in the above-mentioned range.

In the invention, further, a generally employed heating furnace can be used as the heating apparatus 1 for executing the heating as described above. From the industrial point of view, however, there is desirably used a rotary kiln, a roller hearth kiln, a tunnel kiln, a fluidized bed furnace or a swirl flow type firing furnace. An externally heated type rotary kiln, however, is most desirably used since it makes it easy to control the temperature to lie over a range of 780°C to 1000°C and, therefore, to execute the treatment continuously and in large amounts. Though use of the rotary kiln may permit the fly ash powder to turn into lumps more easily than when any other heating systems are used, the process of the present invention can be highly effectively applied to solving this problem.

### Cooling/classifying step;

In the invention, the fly ash containing the unburned carbon in a decreased amount as a result of the heating is introduced in the state of being heated at a high temperature into the cooling/classifying apparatus 3. That is, the heat-treated fly ash in the form of lumps containing fine powder is introduced from the heating apparatus 1 into the cooling/classifying apparatus 3 in the state of being heated at a high temperature though it may be naturally cooled to some extent through the pipe, and is classified into the fine powder and the coarse granular powder. That is, the temperature of the heat-treated fly ash while being conveyed has not been maintained constant. Therefore, the temperature may drop by about several tens of degrees centigrade to about three hundreds of degrees centigrade while it is being conveyed through the pipe to arrive at the cooling/classifying apparatus 3. Here, however, the heat-treated fly ash is still maintained at a temperature of as high as at least not lower than 300°C. In the state of being heated at this high temperature, the fly ash is separated in the cooling/classifying apparatus 3 into the fine powder contained in the lumps and the coarse granular powder (including massive grains of large grain sizes) . Here, at the same time, the fine powder and the coarse granular powder are cooled. In other words, the heat-treated fly ash contains the coarse granular powder that cannot be easily cooled down as will be described later. Therefore, a very extended period of time is required before the heat-treated fly ash is naturally cooled down to a temperature below 300°C. According to the present invention, therefore, the coarse granular powder that difficultly cools down is separated without waiting for the temperature to be lowered down, and is positively cooled down. If the conveyance efficiency is maintained high from the heating apparatus 1 to the cooling/classifying apparatus 3, the temperature drops less. From this point of view, the heat-treated fly ash is conveyed at such an efficiency that the temperature thereof is preferably not lower than 400°C, more preferably, not lower than 500°C and, particularly preferably, not lower than 550°C at a moment when it is introduced into the cooling/classifying apparatus 3.

If cooled before being classified, then the heat-treated fly ash discharged from the heating apparatus 1 contains the fine powder having a large specific surface area as well as the massive granular powder having a small specific surface area. In this case, if it is attempted to cool the whole fly ash down to a predetermined temperature, then it becomes necessary to continuously cool the whole fly ash until the massive granular powder that poorly cools contained therein is also cooled down to the predetermined temperature, causing a decrease in the cooling efficiency and requiring very extended periods of time for cooling. In the present invention, therefore, the fly ash is separated into the coarse powder containing much massive granules that can be cooled poorly efficiently and the fine powder that has a large specific surface area and can be efficiently cooled. The coarse powder is then positively cooled down to improve the cooling efficiency.

The cooling/classifying apparatus 3 carries out the classification based on the wind power classification, and has such a structure that carries out the cooling based on the gas flow used for the classification.

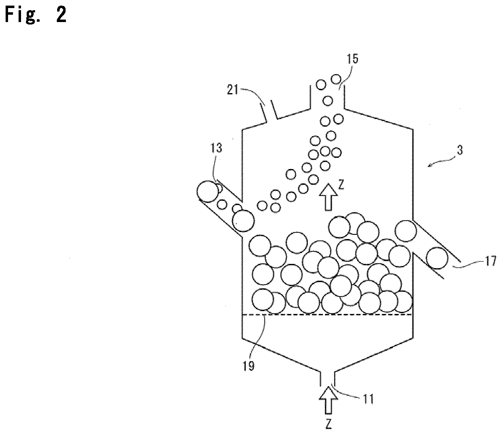

Reference is now made to Fig. 2 which schematically illustrates the structure of the cooling/classifying apparatus 3. The apparatus 3 is a hollow cylindrical body with its bottom wall being a tilted wall expanding from the lower side toward the upper side. The tilted wall is continuous to a straight drum portion which is then continuous to a top wall on the upper side. Unlike the tilted wall of the bottom wall, the top wall is forming a tilted wall that contracts in diameter upward.

As shown in Fig. 2, the bottom wall forms a gas flow introduction port 11 for introducing the gas flow for cooling, the straight drum portion is provided, at its upper portion, with a raw material throw port 13, and the top wall forms a fine grains take-out port 15 that also works as a gas flow discharge port. The drum portion is, further, provided with a coarse grains take-out port 17. The inner space of the hollow cylindrical body is partitioned by a dispersion plate 19 near the boundary between the drum portion and the bottom wall. Further, the upper wall is provided with a water-sprinkling nozzle 21.

That is, a gas (usually, the air) for cooling and classification is introduced through the gas flow introduction port 11 and, as shown in Fig. 2, the gas for cooling forms an ascending gas flow Z in the apparatus 3.

Here, the dispersion plate 19 is forming a number of small holes being uniformly distributed, and the ascending gas flow Z is introduced through the dispersion plate 19 without being deflected.

On the other hand, the above-mentioned heat-treated fly ash has been maintained at a high temperature of not lower than, for example, 480°C. The heat-treated fly ash of such a high temperature is thrown into the raw material throw port 13, comes into contact with the ascending gas flow Z that has passed through the dispersion plate 19, and is cooled and classified. Namely, of the heat-treated fly ash thrown into the raw material throw port 13, the fine grains which is light in weight rides on the ascending gas stream Z and is discharged from the discharge port 15 while being cooled. The coarse grains of heavy weight, on the other hand, deposits on the dispersion plate 19 and stays in the apparatus 3. After having reached a predetermined amount, the heavy coarse grains starts overflowing and is discharged from the coarse grains take-out port 17.

As will be understood from the above description, the fine grains that can be easily cooled is discharged out of the apparatus 3 accompanying the ascending gas flow Z while being cooled by the ascending gas flow Z, whereas the coarse grains that cannot be easily cooled is separated from the fine grains, stays in the apparatus 3, and is cooled being exposed to the ascending gas flow Z at all times. Therefore, the cooling can be accomplished efficiently and in short periods of time.

With the cooling apparatus of the mechanically conveying type, for example, if it is attempted to cool the fine grains and the coarse grains in a state of being mixed together, then it becomes necessary to employ the condition that suits for the coarse grains that cannot be easily cooled. By using the above-mentioned cooling/classifying apparatus 3, however, the fine grains having a small size moves toward the upper side in the apparatus and is discharged out of the apparatus 3 in relatively short periods of time, whereas the coarse grains having a large size moves toward the lower side in the apparatus 3 and is discharged from the apparatus after having stayed therein for relatively long periods of time. It is, therefore, made possible to easily secure the times necessary for cooling the fine grains and the coarse grains, and hence to efficiently execute the cooling.

Moreover, the cooling apparatus of the mechanically conveying type, in many cases, employs the indirect cooling system causing, therefore, a decrease in the cooling efficiency, an increase in the heat-conducting areas and, therefore, an increase in the size of the apparatus. On the other hand, the cooling/classifying apparatus 3 used in the present invention employs the direct cooling system featuring a high cooling efficiency, introducing the gas flow Z uniformly into the apparatus to fluidize the grains, offering increased contact areas between the grains and the gas, and hence making it possible to decrease the size of the apparatus.

Furthermore, the apparatus 3 executes the cooling and the classification simultaneously, and helps simplify the steps for reforming the fly ash.

Here, it is advantageous from the standpoint of cost if the fine grains and the coarse grains are, respectively, cooled down to not higher than 200°C and, specifically, not higher than 100°C since it obviates the need of constructing the apparatuses in the subsequent steps in a heat-resistant structure.

Here, there is no specific limitation on the gas for cooling the heat-treated fly ash that is thrown into the cooling/classifying apparatus 3, and there can be, usually, used the air. Namely, the air is blown through the gas flow introduction port 11 to form the ascending gas flow Z. The gas may have normal temperature and needs not be cooled by using a special cooling apparatus; i.e., the gas is directly used to form the ascending gas flow Z and thereby to cool the fine grains and the coarse grains down to the above-mentioned temperature. Here, in case an extended period of time is required for the cooling, then the cooling water may be sprayed from the sprinkling nozzle 21 provided at an upper part of the apparatus 3 to shorten the cooling time. For example, when a heat-treated fly ash accumulating a large amount of heat is thrown into the apparatus 3, it may become necessary to spray the cooling water. If the water is sprinkled in large amounts, however, the concentration of water increases in the grains. When granulated, therefore, it becomes highly probable that the powders are poorly fluidized. It is, therefore, desired that the temperature in the apparatus 3 is controlled to such a degree that causes no condensation. The water can be sprinkled in an amount of about one liter to about 100 liters per ton of the fly ash.

Due to the above-mentioned cooling, the temperature of the recovered fly ash can be lowered down to not higher than 200°C, preferably, not higher than 150°C and, particularly preferably, not higher than 100°C.

In conducting the classification (i.e., wind power classification) by utilizing the ascending gas flow Z, further, the classification point varies depending on the flow rate and the flow speed of the gas. The classification point increases with an increase in the flow rate or in the flow speed, making it possible to discharge grains of large grain sizes. The classification point can be thus set.

Though there is no specific limitation on the classification point by the classifying apparatus 3, the JIS Standard specifies, for example, a 45 *µ*m sieve residue of the fly ash. It is, therefore, desired to set the classification point relying on the 45 *µ*m sieve residue. Concretely speaking, it is desired that the classification point is so set that the 45 *µ*m sieve residue of the fine grains is not more than 34% by mass and, preferably, not more than 20% by mass. In dealing with the fly ash specified under the JIS Standards, the most generally used JIS Type II Standard specifies the 45 *µ*m sieve residue to be not more than 40% by mass. In the present invention, however, this value is specified to be not more than 34% by mass. This is because the process according to the invention is supposed to be adapted to not only the JIS Standards but also to the fly ash standards of many other overseas countries (e.g., in the U.S., Taiwan and India, the 45 *µ*m sieve residue is not more than 34% by mass).

From the standpoint of obtaining the reformed fly ash that can be favorably used as an admixture, furthermore, it is desired that the classification point is so set that the fine grains obtained through the classification has a median diameter D₅₀ of not more than 30 *µ*m and, preferably, not more than 20 *µ*m calculated as the volume. Usually, the cumulative volume 50% diameter D₅₀ (median diameter) of the fly ash used as the admixture is 10 to 40 *µ*m, and it is also possible to attain a median diameter equivalent thereto. In this case, the ratio of recovering the fine grains and the coarse grains may vary depending on the degree of sintering the heat-treated fly ash grains that are thrown in. Usually, however, the coarse grains is recovered at a ratio of not more than 50% by mass.

The above-mentioned median diameter Dso is measured by using, for example, a laser diffraction grain size distribution meter.

### Step of recovering the fine grains;

The fine fly ash powder is separated and cooled by being classified in the cooling/classifying apparatus 3. The fine fly ash powder is a reformed fly ash containing the unburned carbon in a decreased amount as a result of the heat treatment, and is recovered by the dust-collecting apparatus 5.

As the dust-collecting apparatus 5 for recovering the fine grains, there can be used any apparatus without any problem, such as an electric dust collector, a bag filter or a cyclone that has been used industrially. The fine grains recovered by the dust-collecting apparatus 5 can be used in its form as an admixture.

### Step of milling the coarse grains;

The coarse grains taken out from the cooling/classifying apparatus 3 as a result of having overflown from the apparatus 3 can also be used in its form as a raw material for the production of cement clinkers. To use it as an admixture with the cement or the concrete, however, the coarse granular grains must be milled. This is because the coarse granular grains has very large grain sizes containing in many cases very large massive grains in sizes of from several centimeters to several tens of centimeters or larger. Like in the case of the above-mentioned fine grains, therefore, the coarse grains is milled down to a 45 *µ*m sieve residue of not more than 34% by mass and, specifically, not more than 20% by mass. Here, it is desired that the coarse grains after milled has a median diameter D₅₀ of not more than 30 *µ*m and, specifically, not more than 20 *µ* m.

There is no specific limitation on the milling apparatus, and there can be used a tube mill, a vibration mill, a roller mill, a roll crasher or a hamper crasher that has been industrially employed.

### Step of mixing;

Either the fine grains recovered from the dust-collecting apparatus 5 or the milled product of the coarse grains recovered from the milling apparatus can serve as a reformed fly ash and can be used in their forms as an admixture with the cement or the concrete. From the standpoint of obtaining the reformed fly ash having uniform quality and containing the unburned carbon in a greatly decreased amount, however, it is desired that the above two grains are introduced into the mixing apparatus 9 and are mixed together.

There is no specific limitation on the mixing apparatus 9, and there can be used a mixing apparatus that has usually been used for mixing the grains together. For instance, there can be used a stirrer type mixing machine or a jet stream mixing machine that use the compressed air. The grains can also be mixed together in a blending silo, in a continuous grains conveying machine or in a pneumatic pumping equipment.

The thus obtained reformed fly ash contains the unburned carbon in a decreased amount, has its grain size suitably adjusted, and can be used as an admixture with the cement or as an admixture with the concrete in a customary manner.

### Description of Reference Numerals:

- 1:: heating apparatus
- 3:: cooling/classifying apparatus
- 5:: dust-collecting apparatus
- 7:: milling apparatus
- 9:: mixing apparatus
- 11:: gas introduction port
- 13:: raw material throw port
- 15:: fine grains take-out port
- 17:: coarse grains take-out port
- 19:: dispersion plate
- 21:: sprinkling nozzle

## Claims

1. A process for reforming the fly ash, including:
a heating step that heats a raw fly ash powder containing an unburned carbon at a temperature of 780 to 1000°C to decrease the amount of the unburned carbon contained in said raw fly ash powder; and
a cooling/classifying step that introduces the heat-treated fly ash containing the unburned carbon in decreased amounts obtained through said heating step into a cooling/classifying apparatus so that the fly ash is separated into a fine grains and a coarse grains; wherein
the cooling/classifying apparatus used in said cooling/classifying step has a basic structure in which a gas flow for classification is introduced from a lower side and the gas flow for cooling/classification introduced into said apparatus is then discharged from an upper side;
said heat-treated fly ash thrown into said cooling/classifying apparatus is brought into contact with said gas flow for cooling/classification, the fine grains contained in said heat-treated fly ash is lifted up and discharged out of the apparatus while the coarse grains contained in said heat-treated fly ash is allowed to stay in the apparatus, and the fine grains and the coarse grains are separated and cooled; and
said fine grains discharged from said cooling/classifying apparatus is recovered by using a dust-collecting apparatus, and said coarse grains is recovered from said cooling/classifying apparatus.

2. The process for reforming the fly ash according to claim 1, wherein the classification is carried out in said cooling/classifying apparatus while sprinkling the water.

3. The process for reforming the fly ash according to claim 1, wherein the amount of the unburned carbon is decreased down to less than 3% by mass through said heating step.

4. The process for reforming the fly ash according to claim 3, wherein the heating in said heating step is so executed that 50% by mass is not reached by the content of the massive grains that have a maximum diameter of not less than 150 *µ*m contained in the heat-treated fly ash in which the amount of the unburned carbon has been decreased.

5. The process for reforming the fly ash according to claim 1, wherein in said cooling/classifying step, a classification point is so set that a 45 *µ*m sieve residue of said fine grains obtained by the classification is not more than 34% by mass.

6. The process for reforming the fly ash according to claim 5, wherein in said cooling/classifying step, the coarse grains obtained by the classification is milled until the 45 *µ*m sieve residue thereof is not more than 34% by mass.

7. The process for reforming the fly ash according to claim 6, wherein the fine grains recovered from said dust-collecting apparatus is mixed with the milled grains obtained by milling said coarse grains.
